# EUROPEAN PATENT APPLICATION

(11) **EP 3 777 622 A1**
(43) Date of publication of application: **17.02.2021**
(21) Application number: 19192128.7
(22) Date of filing: 16.08.2019
(51) Int. Cl.: A47J 43/14

(54) **AN EGGSHELL SEPARATOR, AN EGG BREAKING APPARATUS, AND A METHOD FOR OPTIMIZING THE YIELD OF AN EGG BREAKING APPARATUS**

(71) Applicant: Sanovo Technology A/S, 5220 Odense SØ (DK)
(72) Inventor: KRISTENSEN, Jens Kristian Sønderby, 5220 Odense SØ (DK)
(74) Representative: AWA Denmark A/S

(57) **Abstract**

An eggshell separator (1) for separating eggshells (72) from egg content (71) is disclosed. It comprises an egg content inlet (21) configured for receiving egg content (71) from an egg breaking apparatus, a separator plate (3), and an egg content outlet (22). The separator plate is arranged between the egg content inlet and the egg content outlet, so that egg content entering the separator via the egg content inlet will flow through a plurality of openings (32) in the separator plate while eggshells are retained. The eggshell separator further comprising a carrier (4) configured for moving over the separator plate, and for carrying eggshells towards an eggshell outlet (25). A method for optimizing the yield of an egg breaking apparatus and an egg breaking apparatus are also disclosed.

## Description

The present invention relates to an eggshell separator and to a method for optimizing the yield of an egg breaking apparatus.

In modern egg breaking apparatuses operating on an industrial scale eggs are fed to a plurality of egg breaking devices by means of a feeder, each egg breaking device receiving one egg at a time, and the shell of each egg is broken by means of the respective egg breaking device. The contents of each egg are collected in an egg receiving device, each egg receiving device receiving the contents of only one egg in each process cycle. The remains held by each egg breaking device after the breaking of the eggshell are discharged to a waste receptacle and the contents of the egg receiving device are discharged into one or more product receptacles.

Due to the high speed of modern egg processing, to the natural variations in eggshells, and to possible damages to the eggs, the eggshell or part thereof is sometimes dropped prematurely by the egg breaking device and falls into the egg content. In order to remove such eggshells or parts of eggshell from an egg product, the egg product is passed through a net, which retains the eggshells, while the egg product is pumped onwards, being filtered and cooled before being collected in a storage tank. This has worked quite well but the ever increasing food safety concerns has led to a desire for reducing the risk of contamination of the egg product due to contact with eggshells.

It is therefore the object of the invention to provide an eggshell separator and a method for removing eggshells, which allows for an improvement of the bacteriology of the egg product.

In a first aspect of the invention this is achieved with an eggshell separator comprising an egg content inlet configured for receiving egg content from an egg breaking apparatus, a separator plate with a plurality of openings, and an egg content outlet, said separator plate being arranged between the egg content inlet and the egg content outlet, so that egg content entering the separator via the egg content inlet will flow through the openings in the separator plate before reaching the egg content outlet, where the separator plate is configured for retaining eggshells on a first surface, which is facing the egg content outlet when seen in the intended flow direction of the egg content, said eggshell separator further comprising a carrier configured for moving over the first surface of the separator plate and for carrying eggshells towards an eggshell outlet.

In use, egg contents released by the egg receiving devices of an egg breaking apparatus is lead into the separator via the egg content inlet and through the openings in the separator plate. This results in eggshells and larger parts of eggshell being retained on the separator plate while the egg contents continue towards the egg content outlet. The carrier is then moved over the first surface of the separator plate, thereby wiping the eggshells, parts of eggshell, and possible other substances off the separator plate.

In the following, for the sake of simplicity, reference will be made only to eggshells being retained on and removed from the separator plate but it is to be understood that unless otherwise stated other substances, such as parts of eggshell and chalaza, may also be retained and removed.

By using a plate for retaining the eggshells and a carrier moving over it in close proximity to the first surface, the removal of the eggshells can be automated and the eggshells quickly removed. There is no need for waiting for a human operator to discover the presence of eggshells or parts of eggshell and attend to the removal, and no need to stop the production as the carrier will simply move through the continuous flow of egg product. Removing the eggshells quickly without the need for human intervention means a reduction of the time where the eggshells are in contact with the egg contents and consequently allows an improvement of the bacteriology of the egg product. Furthermore, the fact that a human operator is not involved means that the risk of non-egg-related contamination is reduced.

It is presently preferred that the eggshell separator is configured for being mounted with the separator plate positioned below the egg content inlet and above the egg content outlet so that egg content may pass from the egg content inlet to the egg content outlet under the influence of gravity only. It is, however, also possible to use a pump or the like for pushing or pulling egg contents in the direction of movement from the egg content inlet towards the egg content outlet.

In one embodiment the carrier is a plate having its smallest dimension extending substantially in parallel to the direction of movement of the carrier during operation of the eggshell separator. Fingers, brushes etc. may also be employed but the plate-shape is presently preferred as it provides a large continuous surface for carrying eggshells towards an eggshell outlet, while at the same time being easy to keep clean. It may also have a low weight, so that the amount of energy need to move it is low.

In one embodiment the carrier is configured for being moved by swinging or rotation and the first surface of the separator plate has a curvature corresponding to the curvature of the path travelled by the carrier when swung or rotated during operation. By using a curved separator plate and when the concave side of the separator plate is facing towards the egg content inlet, the eggshells will tend to collect on a smaller area of the separator plate due to the influence of gravity and of the dynamic forces of the moving egg contents. Furthermore, when moving the carrier by swinging or rotation, gravity will contribute to keeping the eggshells in contact with the carrier. These two effects in combination result in a high efficiency of the eggshell separator.

In order to ensure a high capacity of the eggshell separator and/or to allow cleaning during operation it may be advantageous that the carrier includes two or more carrier elements each configured for carrying eggshells towards the eggshell outlet. In one embodiment this is achieved by means of a carrier wheel with two or more carrier elements mounted thereon. If the wheel comprises two carrier elements, the wheel is rotated over 180 degrees for each eggshell removal cycle, if is includes three equidistant carrier elements the wheel is rotated over 120 degrees for each cycle, etc.

It is also possible to use a carrier following a linear path of travel, in which case the first surface of the separator plate should be substantially plane.

The overall size of the egg separator will depend on the intended capacity, but it is presently considered expedient that the radius of a swinging or rotating movement of the carrier(s) is 30-300 mm, preferably 40-100 mm.

The distance between the carrier and the separator plate during operation must be big enough to allow the carrier to move freely at all times, but still small enough to make sure that eggshells are removed from the separator plate. When using a plate-shaped carrier it is presently preferred that the minimum distance between the carrier and the first surface is 0,5-7 mm, preferably 1-5 mm, still more preferred 2-4 mm. In this context "minimum distance" is understood as the distance at the position, where the carrier comes closest to the separator plate during operation of the eggshell separator.

It is also possible to use a carrier made wholly or partially from an elastic material, which is able to yield if/when the carrier comes into contact with the separator plate. In that case the minimum distance may be negative. This may for example apply if using brushes.

Likewise, the size and shape of the openings in the separator plate must be such that the egg contents can pass without undue resistance, while eggshells are retained. In one embodiment the openings in the separator plate are elongate with their longest dimension extending substantially parallel to the direction of movement of the carrier. The width of such elongate openings in a direction perpendicular to the direction of movement of the carrier is preferably 5-20 mm, more preferred 7-17 mm, still more preferred about 10 mm. If the carrier is configured for being moved by swinging or rotation along a curved first surface it is presently considered advantageous that the central angle of the circular sector along the arc length of which the elongate opening(s) extend(s) is 90-180 degrees, preferably 100-150 degrees.

It is presently considered advantageous that at least the first surface and/or the carrier is/are made from stainless steel, but food-grade polymers resistant to extensive cleaning may also be employed.

For the movement of the carrier(s), the eggshell separator may further comprise an indexing mechanism, for example including a ratchet wheel and a pawl mechanism. In one embodiment a compressed air supply with a magnetic valve is used for activating the indexing mechanism. Said valve may be controlled by a timer mechanism opening and closing the valve at pre-defined times or with pre-defined intervals.

The indexing mechanism will induce an incremental pattern of movement of the carrier(s) so that it/they move over the separator plate at intervals, but it is also possible to move the carrier(s) continuously.

The eggshell separator is well suited for use with an egg breaking apparatus designed for automatically breaking eggs on an industrial scale, and the/each eggshell separator is then mounted at an egg product outlet, typically at the bottom of the apparatus. If the apparatus is designed for separating the egg contents in white and yolk, it will include more than one egg product outlet and an eggshell separator according to the invention may then be arranged at each of these product outlets. Many such machines include three egg product outlets, one for white, one for yolk, and one for the mixed product resulting when yolks break, and could then also preferably include three eggshell separators. Depending on the construction of the apparatus there may, however, be other means preventing eggshells from ending up in one or more of the three potential egg products and it may then be sufficient to have an eggshell separator at one or two of the three egg product outlets.

In a second aspect of the invention the object is achieved with a method for optimizing the yield of an egg breaking apparatus, said egg breaking apparatus comprising a plurality of egg breaking devices, each for holding and breaking single eggs; a feeder for feeding eggs individually to each egg breaking device; a plurality of egg receiving devices for receiving the contents of eggs broken by the egg breaking devices, each egg receiving device being designed to receive the contents of a single egg at a time, and each egg receiving device possibly comprising a cup for receiving the albumen of the egg and a holder for receiving the yolk of the egg; a waste receptacle for receiving the eggshell and possible other remains; and at least one product receptacle for receiving egg contents from the egg receiving devices,
said method comprising the steps of:
leading egg content to an outlet of the egg breaking apparatus and into an inlet of an eggshell separator,
passing the egg content through openings in a separator plate of the eggshell separator, said separator plate being configured for retaining eggshells on a first surface thereof,
leading egg content to an egg content outlet, and
moving an eggshell carrier over the first surface of the separator plate, thereby carrying eggshells towards an eggshell outlet.

As described above with reference to the eggshell separator, this results in eggshells being removed by the carrier quickly and without the need for human intervention, thereby potentially improving of the bacteriology of the egg product.

Embodiments and advantages described with reference to the first aspect of the invention also apply to the second aspect of the invention and vice versa unless other stated.

In one embodiment the carrier is automatically moved over the first surface at regular intervals. This ensures that the removal sequence is not forgotten or delayed.

The interval between carrier passages may for example be one minute, which will not only ensure that the amount of egg product coming into contact with an eggshell caught on the first surface of the separator plate is kept at a minimum, but will also make sure that the time period where bacterial growth on the eggshell may occur is short.

The intervals may be achieved by moving the carrier constantly at a relatively slow speed or by activating a quicker movement at intervals and leaving the carrier idle in between activations. An indexing mechanism may be used for achieving the latter pattern of movement.

In one embodiment, a carrier comprising four plate-shaped carrier elements is moved by rotation, pausing after having moved over 45 degrees, such that each rotation of the carrier is divided in eight intervals with a pause between each interval. This allows an eggshell to be lifted out of a flow of egg content during a first interval, for egg content to drain from the eggshell during the pause, and for the eggshell to be discharged via the eggshell outlet during the following interval. Other embodiments may for example include shorter movements so that two pauses are allowed for the drainage of egg content and/or a different number of carrier elements.

In the following the invention will be described in more detail with reference to the drawing where:
Fig. 1 is perspective view of an eggshell separator,
Fig. 2 shows the eggshell separator in Fig. 1 from an opposite side,
Fig. 3 is a perspective top view of the eggshell separator in Figs 1 and 2 where the top cover has been removed,
Fig. 4 is an exploded view of the eggshell separator in Figs 1 and 2, but without the indexing mechanism,
Fig. 5 is a perspective, cross-sectional view of the eggshell separator in Figs 1 and 2 as indicated by the plane V in Fig. 2,
Fig. 6 is a perspective, partially cut-away view of an egg breaking apparatus with an eggshell separator mounted thereon, and
Fig. 7-9 are photos of an eggshell separator of the type shown in Fig. 1-6 during operation with the top cover removed.

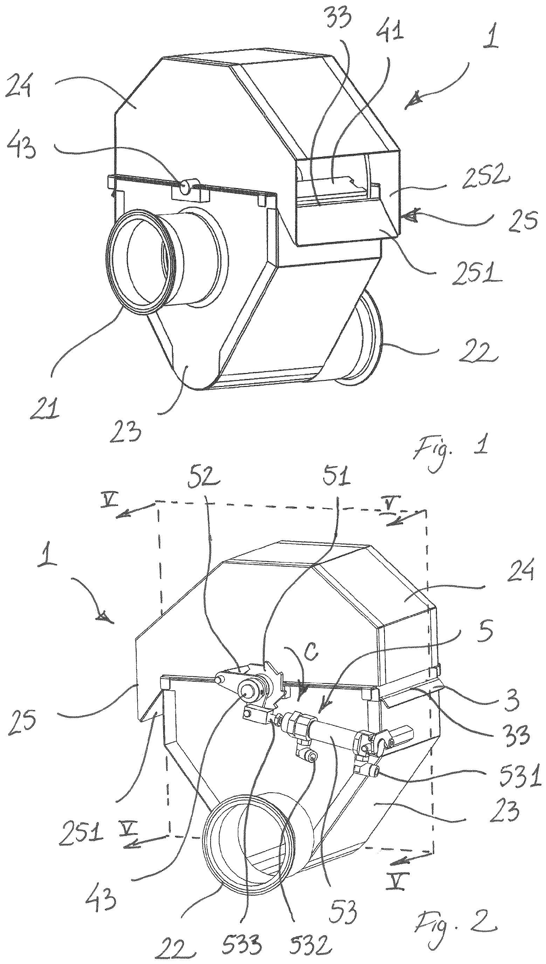

An eggshell separator 1 is shown in Figs 1 and 2. It includes an egg content inlet 21 configured for receiving egg content from an egg breaking apparatus, and an egg content outlet 22 on the opposite side and below the inlet. Both the egg content inlet 21 and the egg content outlet 22 are provided on a main housing 23 and a top cover 24 is arranged on top of the main housing in a manner so that an eggshell outlet 25 is formed between them.

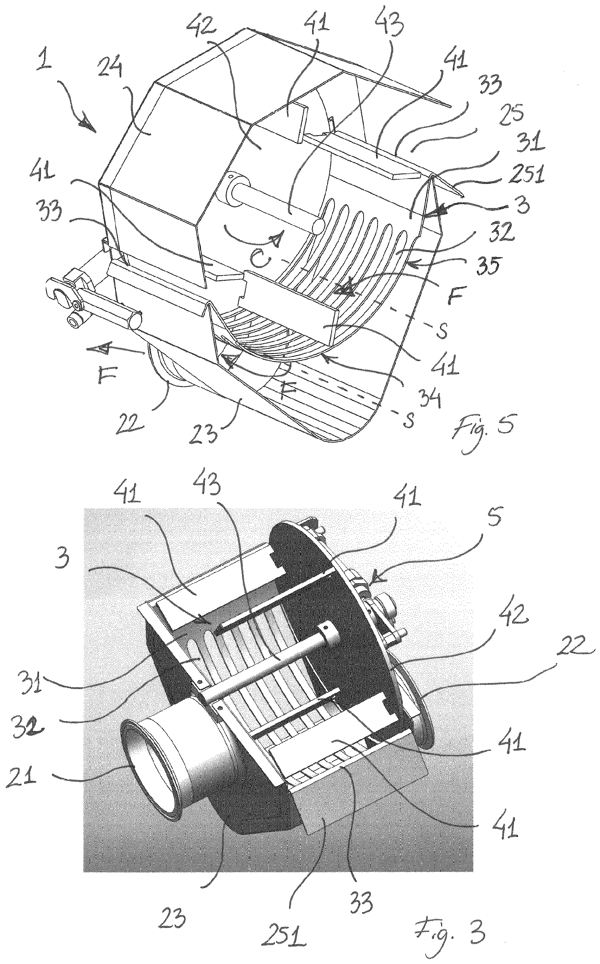

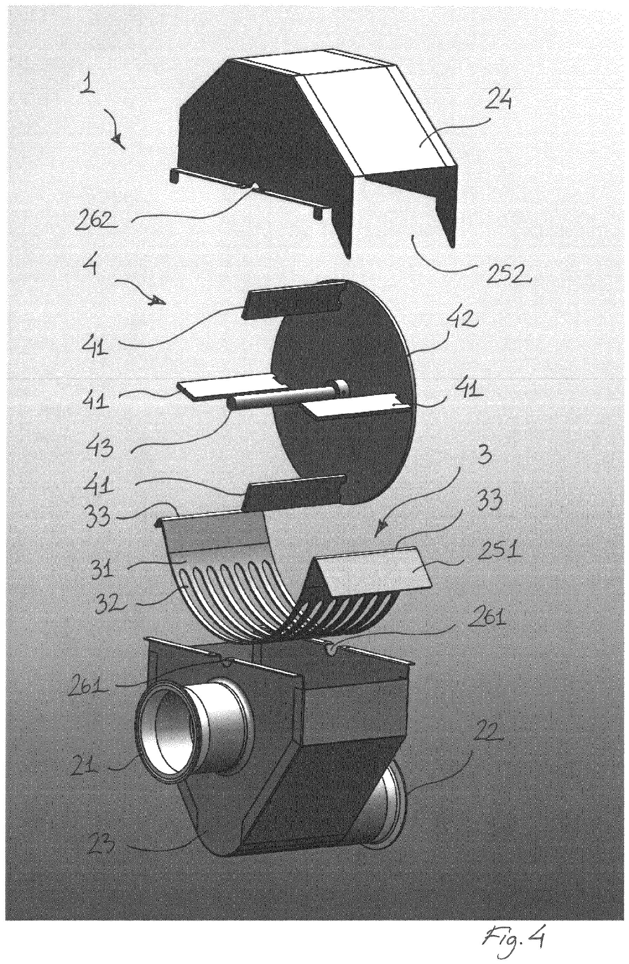

Turning now also to Figs 3 and 4, a separator plate 3 and a carrier 4, which are located inside the housing formed by the main housing 23 and top cover 24 can be seen.

The separator plate 3 is configured for retaining eggshells on a first surface 31 by having seven elongate openings 32, the size of which is such that only egg content and possibly small eggshell fragments can pass through. As is seen in Fig. 3, the separator plate is positioned below the egg content inlet 21 and above the egg content outlet 22 so that egg content may pass from the egg content inlet to the egg content outlet under the influence of gravity only. It is, however, also possible to provide the eggshell separator with a pump (not shown) or to supply the egg content under pressure in order to force the egg content through the eggshell separator.

The carrier 4 is here adapted for being operated by rotation, comprising four plate-shaped carrier elements 41 (hereafter referred to as carrier plates) attached to a plate-shaped carrier wheel 42, which can be rotated about an axle 43. In this embodiment semi-circular recesses 261, 262 in the main housing 23 and the top cover 24, respectively, form bearings for the axle 43 on either side of the housing in the assembled state of the eggshell separator. This construction makes assembly and disassembly of the eggshell separator and hence cleaning and maintenance relatively easy as can be seen from Fig. 4, but other types of bearings may be employed.

As the carrier plates 41 will thus be following a circular path, the separator plate 3 is curved with a radius of curvature corresponding to the curvature of the path travelled by the carrier plates 41 during operation.

In this embodiment the separator plate is provided with a bend 33 at each end, said bends allowing the separator plate to hang on either side of the main housing 23. This provides for easy disassembly, cleaning and reassembly of the egg separator as also seen in Fig. 4, but other embodiments are of course possible. At one side, the bend 33 on the separator plate 3 forms a downwards inclining flange 251 forming a lowermost section of the eggshell outlet while a recess 252 in the top cover 24 defines the three other sides of the rectangular eggshell outlet 25. In other embodiments the inclining flange 251 may be formed wholly or partially by the main housing or the eggshell outlet may be formed entirely in the main housing 23 or entirely in the top cover 24, and it is to be understood that the eggshell outlet does not need to have a rectangular shape.

In an alternative embodiment (not shown) the carrier comprises only one plate element which is instead swung back and forward over the first surface 31 of the separator plate 3 in a pendulum movement, possibly using an axle 43 as the one shown in the drawing. In that case, eggshell outlet openings 25 may be provided at both sides of the eggshell separator.

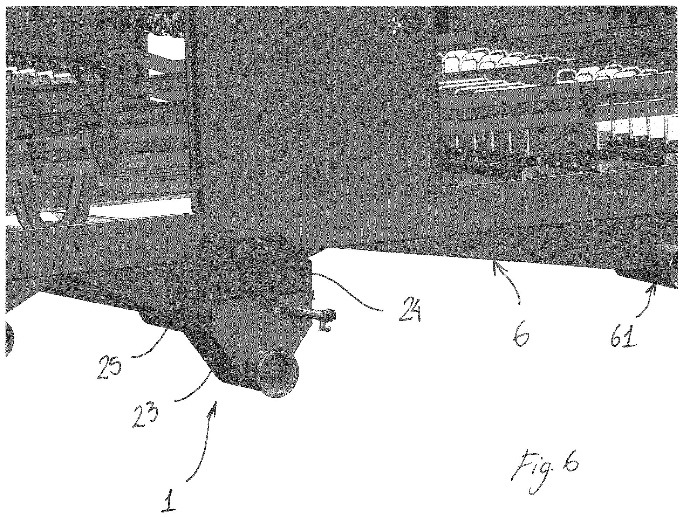

The egg shell separator 1 is intended for being mounted on a product outlet of an egg breaking apparatus 6 of the type comprising a plurality of egg breaking devices, each for holding and breaking single eggs, a plurality of egg receiving devices for receiving the contents of eggs broken by the egg breaking devices, and a number of product receptacles for receiving the contents of the egg receiving device as shown in Fig. 6. Another product outlet 61 without an eggshell separator is seen at the right-hand side of Fig. 6, though partially cut-away.

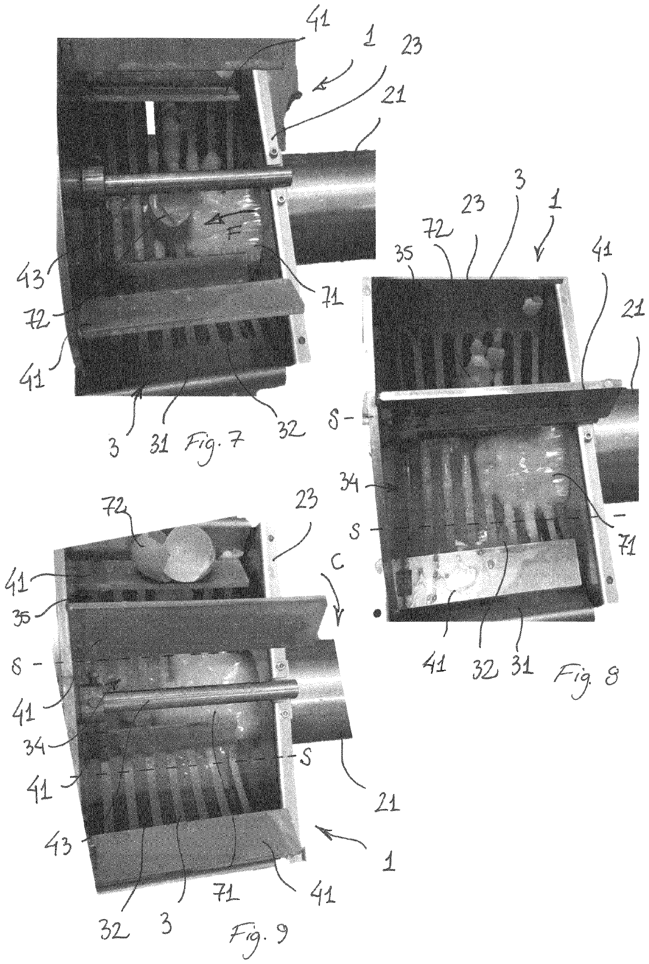

When the eggshell separator 1 is in operation, egg contents 71 entering via the egg content inlet 21 will follow the flow direction indicated by the arrows F in Figs 5 and 7, so that egg contents pass through the openings 32 in the separator plate and exit via the egg content outlet 22. The carrier 4 rotates about axle 43 in the direction indicated by the arrows C in Figs 5 and 9. In this way the carrier plates 41 pass over the first surface 31 of the separator plate and an eggshell 72 found on the separator plate will be carried upwards over the side of the separator plate towards the eggshell outlet 25. In Fig. 5 the eggshell outlet is located at the right-hand side and in Figs 7-9 it is located uppermost. It is noted that in this embodiment the eggshell outlet 25 is located substantially at level with the axle 43, which is considered advantageous as it allows maximum time for egg content 71 to drain from the eggshell 72, but that it may be positioned lower in other embodiments.

As is seen in Figs 7-8, the curvature of the separator plate 3 and the fact that the egg content inlet 21 is positioned at the centre of the eggshell separator 1 means that the egg content 71 substantially only comes into contact with a centre section 34 of the separator plate indicated by broken lines S in Figs 5, 8 and 9. When a carrier plate 41 passes the inlet, it passes through the flow of egg contents 71 and carries the eggshell 72 upwards over a side section 35 of the separator plate, which is substantially free from egg content. Since this the openings 32 in the separator plate continue over the side section 35, egg content may drain from the eggshell 72 while it passes the side section. When using an indexing mechanism 5 for moving the carrier 4 it may be designed such that each carrier plate 41 stops for a short period at the side section 35 allowing egg content 71 to drain off the eggshell 72 before continuing towards the eggshell outlet 25.

The fact that the openings 32 in the separator plate 3 are elongate with their longest dimension extending substantially parallel to the direction of movement C of the carrier 4 allows an optimal draining of egg content from the eggshells 72 as drainage may continue substantially uninterrupted until the eggshell eventually reaches the eggshell outlet 25. Another advantage of this shape and orientation of the openings is that there is only one opening edge extending perpendicular to the direction of movement C of the carrier in the path travelled by the eggshell 72, thus reducing the risk of small shell fragments breaking off due to the eggshell coming into contact with such edges. The use of openings having other shapes and/or directions is, however, not excluded, and contact with opening edges may be advantageous in that any chalaza or other egg content 71 still connected to the eggshell 72 may be broken off instead of being discharged with the eggshell. It is also noted that the number of openings may be different from what is shown.

In the embodiment shown, the rotation of the carrier axle 43 and thus the carrier wheel 42 is achieved be means of an indexing mechanism 5 including a ratchet wheel 51, a locking pawl 52, and a pneumatic cylinder 53 as is seen in Fig. 2. The pneumatic cylinder is supplied with compressed air via air inlet 531 and the piston 532 pushes on the ratchet wheel forcing it to move in the direction marked by the arrow C. Such systems are well known by the skilled person and will therefore not be described in further detail here.

The ratchet wheel 51 is here provided with eight teeth and the carrier with four equidistanced carrier plates 41. This means that the 90-degree movement of a carrier plate from the lowermost point, where it is contact with the flow of egg contents 71 and potentially picks up an eggshell 72, to the eggshell outlet 25 will be divided in two steps. In other words, each carrier plate 41 will pause mid-way, thus providing a time interval where egg contents may drain from the egg shell while the carrier plate is inclined so that draining is facilitated. This combination of the use of plate-shaped carrier elements 41 and a carrier 4 performing a circular movement divided in eight 45-degree steps is presently considered particularly advantageous and this applies independent of other features of the eggshell separator. Particularly it applies independently of the embodiment of openings in the separator plate.

Other means of causing the axle 43 to rotate may of course also be employed, including a crank axle system (not shown), which may be used for a inducing a continuous movement of the carrier.

## Claims

**1.** An eggshell separator (1) comprising an egg content inlet (21) configured for receiving egg content (71) from an egg breaking apparatus, a separator plate (3) with a plurality of openings (32), and an egg content outlet (22), said separator plate being arranged between the egg content inlet and the egg content outlet, so that egg content entering the separator via the egg content inlet will flow through the openings in the separator plate before reaching the egg content outlet, where the separator plate is configured for retaining eggshells (72) on a first surface (31), which is facing the egg content outlet when seen in the intended flow direction (F) of the egg content, said eggshell separator further comprising a carrier (4) configured for moving over the first surface of the separator plate and for carrying eggshells towards an eggshell outlet (25).

**2.** An eggshell separator according to claim 1 configured for being mounted on an egg breaking apparatus (6) with the separator plate (3) positioned below the egg content inlet (21) and above the egg content outlet (22) so that egg content (71) may pass from the egg content inlet to the egg content outlet under the influence of gravity.

**3.** An eggshell separator according to claim 1 or 2, where the carrier (4) is configured for being moved by swinging or rotation and where the first surface (31) of the separator plate (3) has a curvature corresponding to the curvature of the path travelled by the carrier when swung or rotated.

**4.** An eggshell separator according to claim 3, further comprising a carrier wheel (42) with two or more carrier elements (41) mounted thereon.

**5.** An eggshell separator according to claim 3 or 4, where the radius of the movement of the carrier (4) is 30-300 mm, preferably 40-100 mm, still more preferred about 60 mm.

**6.** An eggshell separator according to one or more of the preceding claims, where the minimum distance between the carrier (4) and the first surface (31) is 0,5-7 mm, preferably 1-5 mm, still more preferred 2-4 mm.

**7.** An eggshell separator according to one or more of the preceding claims, where the openings (32) in the separator plate (3) are elongate with their longest dimension extending substantially parallel to the direction of movement (C) of the carrier (4).

**8.** An eggshell separator according to claim 7, where the width of the elongate openings (32) in a direction perpendicular to the direction of movement (C) of the carrier (4) is 5-20 mm, preferably 7-17 mm, still more preferred about 10 mm.

**9.** An eggshell separator according to claims 3 and 7, where the central angle of the circular sector along the arc length of which the elongate opening(s) (32) extend(s) is 90-180 degrees, preferably 100-150 degrees

**10.** An eggshell separator according to one or more of the preceding claims, where the carrier/each carrier element (41) is a plate having its smallest dimension extending substantially perpendicular to the direction of movement (C) of the carrier (4).

**11.** An eggshelll separator according to one or more of the preceding claims, where at least the first surface (31) and/or the carrier (4) is/are made from stainless steel.

**11.** An eggshelll separator according to one or more of the preceding claims, further comprising an indexing mechanism (5) controlling the movement of the carrier (4).

**12.** An egg breaking apparatus (6) including at least one eggshell separator (1) according to one or more of claims 1-11, where the/each eggshell separator is mounted at an egg product outlet (61) at the bottom of the apparatus.

**13.** A method for optimizing the yield of an egg breaking apparatus (6), said egg breaking apparatus comprising a plurality of egg breaking devices, each for holding and breaking single eggs; a feeder for feeding eggs individually to each egg breaking device; a plurality of egg receiving devices for receiving the contents of eggs broken by the egg breaking devices, each egg receiving device being designed to receive the contents of a single egg at a time, and each egg receiving device possibly comprising a cup for receiving the albumen of the egg and a holder for receiving the yolk of the egg; a waste receptacle for receiving the eggshell and possible other remains; and at least one product receptacle for receiving egg content (71) from the egg receiving devices,
said method comprising the steps of:
leading egg content (71) to an product outlet (61) of the egg breaking apparatus (6) and into an egg content inlet (21) of an eggshell separator (1),
passing the egg content (71) through openings (32) in a separator plate (3) of the eggshell separator (1), said separator plate being configured for retaining eggshells (72) on a first surface (31) thereof,
leading egg content (71) to an egg content outlet (22), and
moving an eggshell carrier (4) over the first surface (31) of the separator plate (3), thereby carrying eggshells (72) towards an eggshell outlet (25).

**14.** A method according to claim 13, where the carrier (4) is automatically moved over the first surface (31) at regular intervals.

**15.** A method according to claim 13 or 14, where a carrier (4) comprising four plate-shaped carrier elements (41) is moved by rotation, pausing after having moved over 45 degrees, such that each rotation of the carrier (4) is divided in eight intervals.
